# EUROPÄISCHE PATENTSCHRIFT

(11) **EP 1 689 639 B1**
(45) Veröffentlichungstag und Bekanntmachung des Hinweises auf die Patenterteilung: **06.08.2008**
(21) Anmeldenummer: 04796934.0
(22) Anmeldetag: 04.11.2004
(51) Int. Cl.: B64D 11/00

(54) **EINRICHTUNG ZUR EINLEITUNG UND VERTEILUNG VON KRÄFTEN IN EIN BZW. IN EINEM GEPÄCKABLAGEFACH**
DEVICE FOR INTRODUCING AND DISTRIBUTING FORCES INTO OR INSIDE A LUGGAGE COMPARTMENT
DISPOSITIF POUR INTRODUIRE ET REPARTIR DES FORCES DANS UN CASIER A BAGAGES

(30) Priorität: 01.12.2003 AT 19182003
(43) Veröffentlichungstag der Anmeldung: 16.08.2006
(73) Patentinhaber: Fischer Advanced Composite Components AG, 4910 Ried im Innkreis (AT)
(72) Erfinder: STEPHAN, Walter, A-4973 St. Martin (AT); PAMMINGER, Erich, A-4984 Weilbach (AT)
(74) Vertreter: Sonn & Partner Patentanwälte
(86) Internationale Anmeldenummer: PCT/AT2004/000389
(87) Internationale Veröffentlichungsnummer: WO 2005/054054

(56) Entgegenhaltungen:
- EP-A- 0 658 644
- WO-A-03/031260
- US-A- 5 108 048
- US-A- 5 788 349
- US-A- 5 839 694

## Beschreibung

Die Erfindung betrifft ein Gepäckablagefach für Fahrzeuge, mit endseitigen Seitenwänden, einer Deckenwand und einem Boden, wobei an der Deckenwand eine Leiste zur Einleitung, Übertragung und bzw. oder Verteilung von Kräften bzw. Spannungen angeordnet ist, welche mit den Seitenwänden verbunden ist.

Die Erfindung betrifft insbesondere ein Gepäckablagefach für Flugzeuge aber auch andere Fahrzeuge wie Flugzeugen, Boden- und Wasserfahrzeugen, beispielsweise Expresszügen, Schnellbooten und dgl., die hohen Geschwindigkeitsänderungen ausgesetzt sind, wodurch die in den Gepäckablageflächern untergebrachten Gegenstände Schaden erleiden können.

Bisher wurden solche als Gepäckablagefach dienende Behälter aus plattenförmigen Elementen mit komplexen metallischen Krafteinleitungselementen versehen, welche in Klebetechnik oder mit Schrauben oder Nieten auf verstärkten Teilen der Wandstruktur des Behälters befestigt waren. Diese Technik war schwer und aufwendig.

Beispielsweise beschreiben die EP 514 957 A1 und die EP 718 189 A1 solche Überkopfgepäckablagefächer für Flugzeuge.

Die US 5 839 694 A zeigt eine Gepäckablage, insbesondere für Passagierflugzeuge mit einer absenkbaren Schale, welche so ausgebildet ist, dass das nutzbare Fassungsvermögen der Schale gegenüber bisherigen Lösungen vergrößert wird. Demnach werden sämtliche Gelenkpunkte, welche zur Führung der Bewegung der Schale erforderlich sind, bei frontaler Betrachtung im Wesentlichen in einem Bereich angeordnet, der nach unten durch die obere Ebene der Deckwand und in Längsrichtung durch die äußeren Ebenen der Seitenwände begrenzt wird. An der Deckseite der Gepäckablage ist ein Querträger angeordnet, der zur Befestigung der Elemente dient, welche zur Bewegung und Dämpfung der Schale erforderlich sind. Der Träger ist mit der Deckwand des Gepäckablagefachs verbunden.

Die EP 658 644 A2 beschreibt eine Überkopfgepäckablage für Flugzeuge, welche aus einer Ummulde aus in Sandwich-Bauweise gefertigten Kompositteilen aus Carbonfaser-Verbundwerkstoff und aus Endwänden besteht.

Die WO 03/031260 A1 zeigt ein Gepäckablagefach, welches mit seitlich des Behälters angeordneten steifen Verbindungselementen, welche mit den Versteifungsstrukturen am Boden des Gepäckablagebehälters verbunden sind, ausgestattet ist.

Die US 5,108,048 A zeigt ein Gepäckablagefach für Flugzeuge, welches möglichst einfach und rasch montiert und demontiert werden kann. Zu diesem Zweck befinden sich an den Seitenwänden des Gepäckablagefachs Befestigungselemente, welche mit entsprechenden Gegenstücken, die mit dem Flugzeugrumpf verbunden sind, gekoppelt werden können. Die Konstruktion ist relativ aufwändig und weist aufgrund der Komplexität ein relativ hohes Gewicht auf.

Schließlich zeigt die DE 200 16 405 U1 ein Gepäckfach eines Fahrzeuges, welches eine möglichst einfache Bewegung der Gepäckfachklappe gewährleistet. Zu diesem Zweck ist die Gepäckfachklappe entlang einer bogenförmigen Nut, welche in den Seitenelementen des Gepäckablagefachs integriert ist, verschiebbar ausgebildet. Über die Verbindung der einzelnen Elemente des Gepäckablagefachs untereinander und des Gepäckablagefachs selbst mit der tragenden Struktur des Fahrzeuges werden keine Hinweise gegeben.

Die Aufgabe der Erfindung besteht darin, diesen Nachteil zu vermeiden und Maßnahmen für eine gewichtseinsparende Lösung zu finden. Die Einrichtung soll möglichst einfach und kostengünstig herstellbar sein.

Die Aufgabe wird erfindungsgemäß dadurch gelöst, dass die Seitenwände mit nach oben ragenden Ansätzen versehen sind mit welchen die Leiste verbunden ist, wobei die Leiste aus faserverstärkten Kunststoff besteht und mit der Deckenwand verklebt ist. Die vorliegende Erfindung schafft ein Gepäckablagefach, welches mit einem geringen Arbeits- und Kostenaufwand herstellbar ist. Die deckenseitig angeordnete Leiste dient zur Aufnahme und bzw. oder Dämpfung und bzw. oder Verteilung der Scher- und bzw. oder Zug- und bzw. oder Druckkräfte bzw. -spannungen. Die Leiste entlastet somit die Deckenwand und die Seitenwände des Gepäckablagefachs. Die Krafteinleitung findet direkt in die nach oben ragenden Ansätze der endseitigen Seitenwände des Gepäckablagefachs statt. Die Leiste ist mit den Seitenwänden des Gepäckablagefachs verbunden und mit der Deckenwand des Gepäckablagefachs verklebt. Durch die Verklebung ist die Leiste gegenüber dem Gepäckablagefach in seiner Längsrichtung unverrückbar befestigt.

Am Ansatz der Seitenwand des Gepäckablagefachs kann eine Buchse, Lasche oder dgl. vorgesehen sein.

Die Leiste besitzt versteifenden Querschnitt, beispielsweise L-förmigen Querschnitt. Es sind auch andere Querschnitte, beispielsweise in Form eines I, Z, T, J oder dgl., möglich.

Vorzugsweise ist die Leiste über ihre gesamte Länge mit der Deckwand des Gepäckablagefachs verklebt.

Weiters kann am Boden des Gepäckablagefachs ein Bodenträger zur Aufnahme der Kräfte und deren gleichmäßigen Verteilung auf das Gepäckablagefach vorgesehen sein.

Die Leiste ist vorzugsweise aus glasfaser- oder carbonfaserverstärktem Kunststoff hergestellt.

Weitere Merkmale der Erfindung werden an Hand der Zeichnungen näher erläutert, in welchen ein Ausführungsbeispiel eines Gepäckablagefaches dargestellt ist.

Es zeigen:
Fig. 1 eine perspektivische Ansicht eines Gepäckablagefaches von vorne;
Fig. 2 das Gepäckablagefach gemäß Fig. 1 von hinten;
Fig. 2A eine perspektivische Ansicht des Gepäckablagefaches gemäß Fig. 1 von unten;
Fig. 3 das Gepäckablagefach gemäß Fig. 1 von oben;
Fig. 4 einen Schnitt durch das Gepäckablagefach gemäß Fig. 3 der Schnittlinie IV-IV ;
Fig. 5 einen Schnitt durch das Gepäckablagefach gemäß Fig. 3 entlang der Schnittlinie V-V ;
Fig. 6 das Detail D aus Fig. 5 in vergrößertem Maßstab;
Fig. 7 eine Detailansicht des Gepäckablagefaches im Bereich der Bodenleiste in vergrößertem Maßstab; und
Fig. 8 das Detail B aus Fig. 4 in vergrößertem Maßstab.

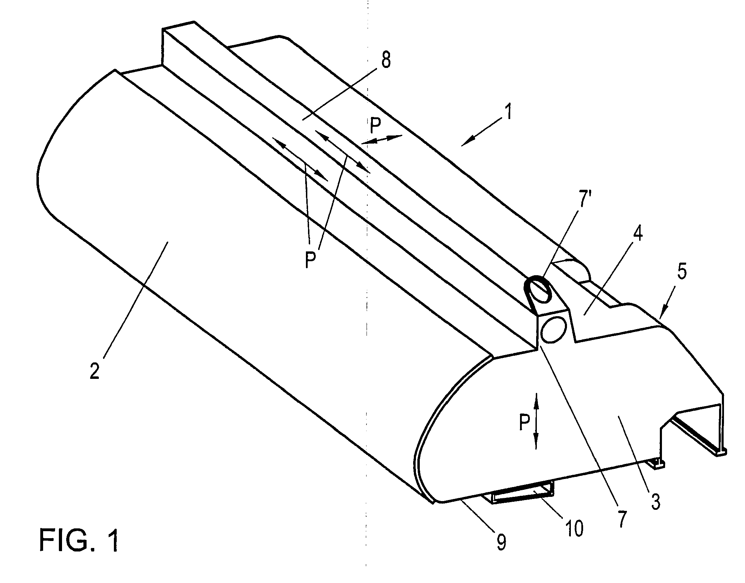

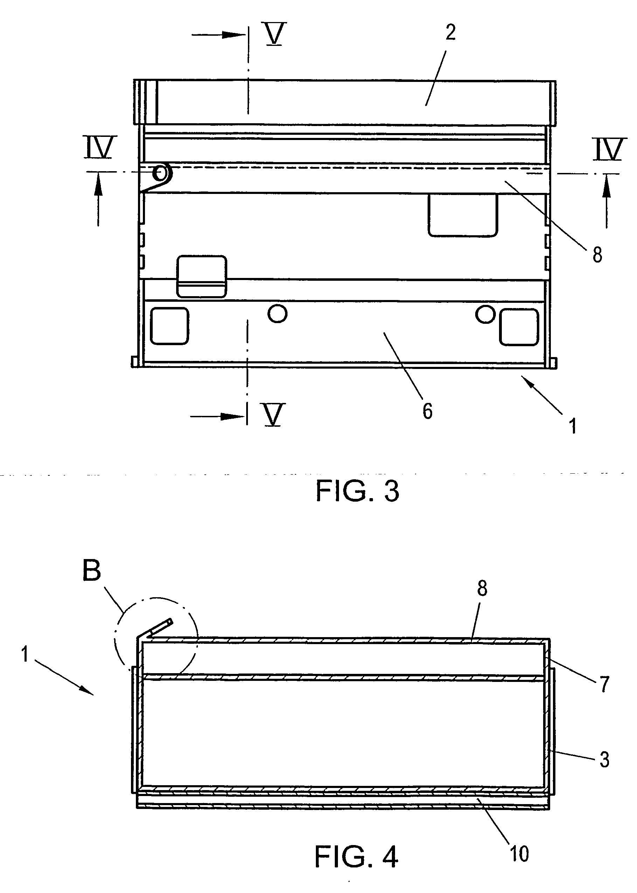

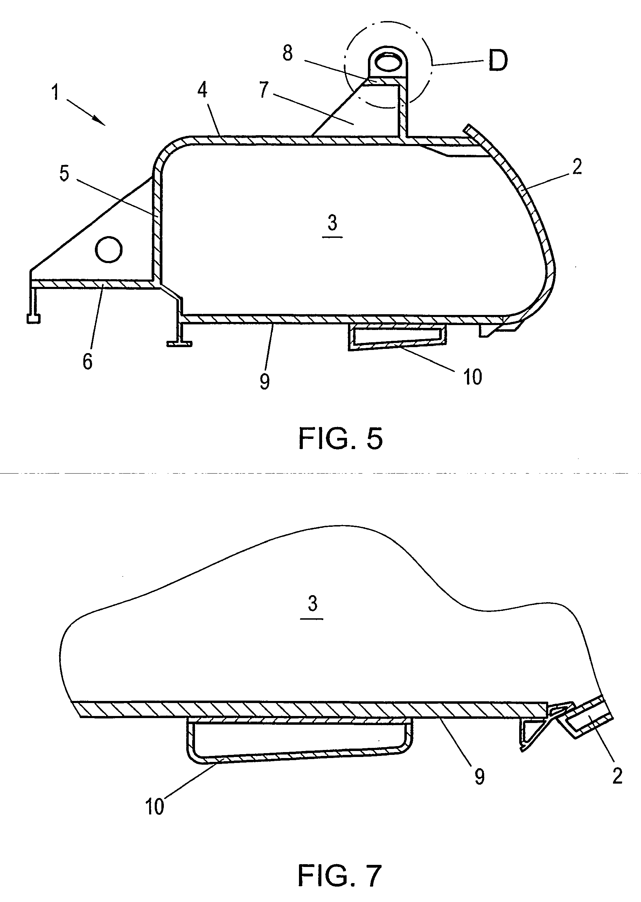

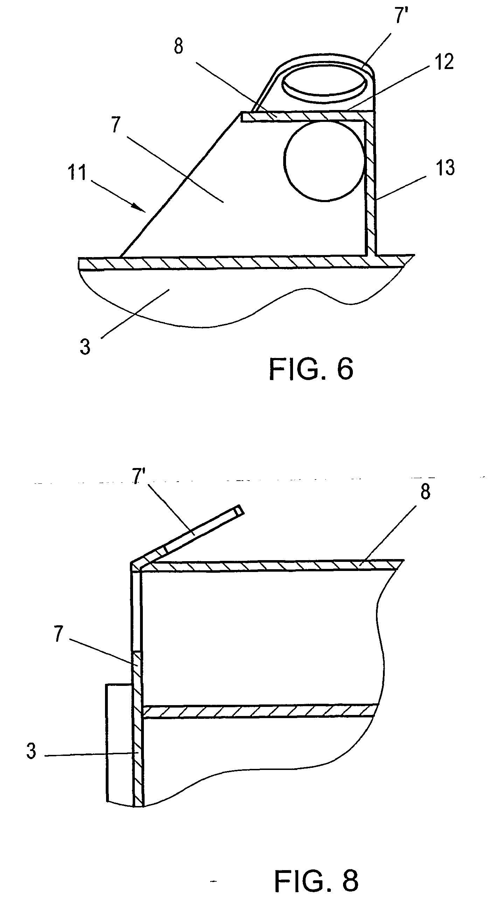

Das in den Fig. 1 bis 8 dargestellte Gepäckablagefach 1 weist eine öffenbare Schwenkklappe 2 zum Einlegen und Entnehmen des Handgepäcks etc., je eine Seitenwand 3 zum seitlichen Abschluss des Gepäckablagefachs 1, eine Deckenwand 4 und eine nach unten abgestufte Rückwand 5, an welche eine horizontale Befestigungsleiste 6 anschließt, auf.

Die Seitenwände 3 sind mit einem nach oben ragenden Absatz 7 versehen, welcher mit dem korrespondierenden Absatz 7 der gegenüberliegenden Seitenwand 3 einen nach oben ragenden, im Querschnitt etwa trapezoiden Ansatz 11 bildet, auf welchem eine im vorliegenden Falle im Querschnitt L-förmige Leiste 8 befestigt, vorzugsweise über ihre gesamte Länge aufgeklebt ist, wobei ein horizontaler Schenkel der Leiste 8 auf der im Wesentlichen horizontalen Oberfläche des Vorsprungs aufliegt, während der rechtwinkelig abstehende Schenkel die anschließende der Schwenkklappe 2 zugekehrte lotrechte Wand 13 bedeckt.

Das Verbindungselement, im vorliegenden Fall die Leiste 8, gleichgültig in welcher Form es ausgebildet ist, kann aus Glasfaser oder Carbonfaser bestehen, aber auch mit sonstigen faserverstärkten Kunststoffen, Metallen, Verbundwerkstoffen etc. versehen sein.

Zur Krafteinleitung in das Gepäckablagefach 1 ist einer der Vorsprünge 7 mit einer Buchse 7', einer Lasche oder dgl. versehen. Selbstverständlich kann für die Krafteinleitung auch eine andere Ausstattung verwendet werden.

Am Boden 9 des Gepäckablagefachs 1 ist parallel zur Leiste 8 eine Bodenträger 10, Leiste oder dgl. beispielsweise ebenfalls durch Kleben über die gesamte Länge des Gepäckablagefachs 1 befestigt, welche die gleiche oder eine ähnliche Aufgabe wie die Leiste 8 zu erfüllen hat.

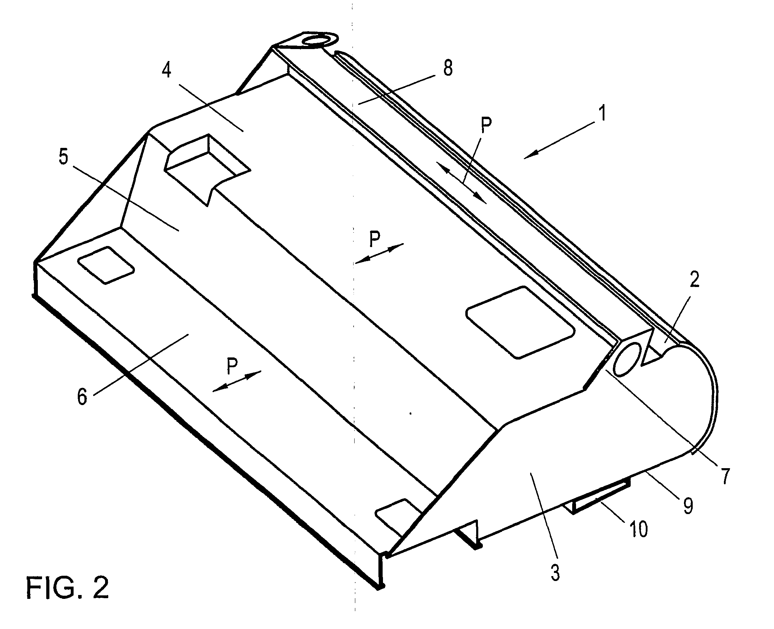

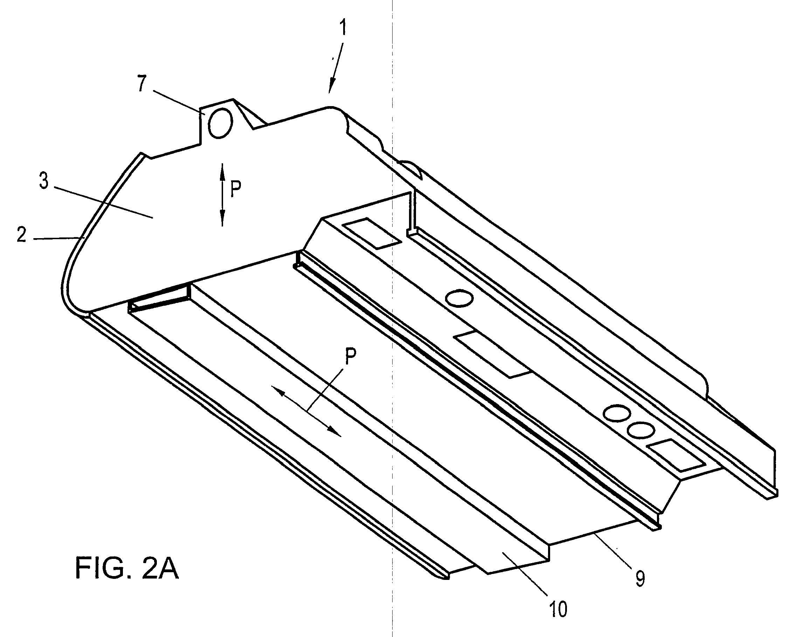

Durch rasches Beschleunigen oder Abbremsen des Fahrzeuges, im vorliegenden Falle des Flugzeuges beim Start oder bei der Landung entstehen im Gepäckablagefach 1 Kräfte, welche in den Fig. 1 und 2 durch die Pfeile P angedeutet sind und durch die Leiste 8 oder dgl. bzw. der Bodenträger 10 oder dgl. am Gepäckablagefach 1 verteilt werden, so dass die strukturelle Integrität des Gepäckablagefachs 1 bei erhöhter Belastung gewahrt bleibt. Der gleiche Effekt wird unabhängig vom Bestimmungszweck bei jedem beliebigen Gepäckablagefach 1, beispielsweise bei Kästen zur Aufbewahrung von Speisen, Geschirr, Besteck u.a. erzielt.

Das Gepäckablagefach 1 kann im Rahmen der Erfindung unterschiedlich ausgeführt werden, z.B. unten offen, und durch eine Schütte verschließbar sein.

Die erfindungsgemäßen Maßnahmen sind an die jeweiligen Verhältnisse angepasst, auch bei Hochgeschwindigkeitszügen, Schnellbooten u.a. Fahrzeugen, bei welchen hohe Geschwindigkeitsunterschiede auftreten, anwendbar.

## Patentansprüche

1. Gepäckablagefach (1) für Fahrzeuge, mit endseitigen Seitenwänden (3), einer Deckenwand (4) und einem Boden (9), wobei an der Deckenwand (4) eine Leiste (8) zur Einleitung, Übertragung und bzw. oder Verteilung von Kräften bzw. Spannungen angeordnet ist, welche mit den Seitenwänden (3) verbunden ist, **dadurch gekennzeichnet, dass** die Seitenwände (3) mit nach oben, über die Deckenwand (4) hinweg ragenden Ansätzen (11) versehen sind, mit welchen die Leiste (8) verbunden ist, wobei die Leiste (8) aus faserverstärktem Kunststoff besteht und mit der Deckenwand (4) verklebt ist.

2. Gepäckablagefach (1) nach Anspruch 1, **dadurch gekennzeichnet, dass** am Ansatz (11) der Seitenwand (3) eine Buchse (7'), Lasche oder dgl. vorgesehen ist.

3. Gepäckablagefach (1) nach Anspruch 1 oder 2, **dadurch gekennzeichnet, dass** die Leiste (8) versteifenden Querschnitt, beispielsweise L-förmigen Querschnitt, besitzt.

4. Gepäckablagefach (1) nach einem der Ansprüche 1 bis 3, **dadurch gekennzeichnet, dass** die Leiste (8)über ihre gesamte Länge mit der Deckwand (4) verklebt ist.

5. Gepäckablagefach (1) nach einem der Ansprüche 1 bis 4, **dadurch gekennzeichnet, dass** am Boden (9) ein Bodenträger (10) zur Verteilung der Kräfte befestigt ist.

6. Gepäckablagefach (1) nach einem der Ansprüche 1 bis 5, **dadurch gekennzeichnet, dass** die Leiste (8) aus glasfaserverstärktem Kunststoff besteht.

7. Gepäckablagefach (1) nach einem der Ansprüche 1 bis 6, **dadurch gekennzeichnet, dass** die Leiste (8) aus carbonfaserverstärktem Kunststoff besteht.

## Claims

1. A luggage stowage compartment (1) in vehicles, having end-side side walls (3), a top wall (4) and a bottom (9), wherein a ledge (8) is arranged on the top wall (4) for introducing, transmitting and/or distributing forces and/or tensions, said ledge (8) being connected to the side walls (3), **characterised in that** the side walls (3) are provided with brackets (11), which project upwards beyond the top wall (4), the ledge (8) being connected with said brackets (11), wherein the ledge (8) consists of fibre-reinforced synthetic material and is adhered to the top wall (4).

2. The luggage stowage compartment (1) according to claim 1, **characterised in that** a bushing (7'), a lug or the like, is provided on the bracket (11) of the side wall (3).

3. The luggage stowage compartment (1) according to claim 1 or 2, **characterised in that** the ledge (8) has a reinforcing cross-section, e.g. an L-shaped cross-section.

4. The luggage stowage compartment (1) according to any one of claims 1 to 3, **characterised in that** the ledge (8) is adhered to the top wall (4) across its entire length.

5. The luggage stowage compartment (1) according to any one of claims 1 to 4, **characterised in that** a bottom carrier (10) is fastened to the bottom (9) for the distribution of the forces.

6. The luggage stowage compartment (1) according to any one of claims 1 to 5, **characterised in that** the ledge (8) consists of glass-fibre-reinforced synthetic material.

7. The luggage stowage compartment (1) according to any one of claims 1 to 6, **characterised in that** the ledge (8) consists of carbon-fibre-reinforced synthetic material.

## Revendications

1. Compartiment à bagages (1) pour véhicule, avec des parois latérales (3)du côté des extrémités, une paroi de couvercle (4) et un fond (9), sur la paroi de couvercle (4) étant disposée une baguette (8) pour l'introduction, la transmission et/ou la distribution de forces ou de contraintes, laquelle est reliée aux parois latérales (3), **caractérisé en ce que** les parois latérales (3) sont pourvues d'appendices (11) dépassant vers le haut de la paroi de couvercle (4), auxquels la baguette (8) est reliée, la baguette (8) étant constituée d'une matière plastique renforcée par des fibres et collée avec la paroi de couvercle (4).

2. Compartiment à bagages (1) selon la revendication 1, **caractérisé en ce que** sur l'appendice (11) de la paroi latérale (3) est prévue une douille (7'), une patte ou similaire.

3. Compartiment à bagages selon la revendication 1 ou 2, **caractérisé en ce que** la baguette (8) possède une section transversale de renfort, par exemple une section transversale en L.

4. Compartiment à bagages (1) selon l'une quelconque des revendications 1 à 3, **caractérisé en ce que** la baguette (8) est collée avec la paroi de couvercle (4) sur toute sa longueur.

5. Compartiment à bagages (1) selon l'une quelconque des revendications 1 à 4, **caractérisé en ce que** sur le fond (9) est fixé un support de fond (10) pour la répartition des forces.

6. Compartiment à bagages (1) selon l'une quelconque des revendications 1 à 5, **caractérisé en ce que** la baguette (8) est constituée d'une matière plastique renforcée par des fibres de verre.

7. Compartiment à bagages (1) selon l'une quelconque des revendications 1 à 6, **caractérisé en ce que** la baguette (8) est constituée d'une matière plastique renforcée par des fibres de carbone.
